(19) Europäisches Patentamt
European Patent Office
Office européen des brevets

(11) EP 4 579 808 A1

(12) EUROPEAN PATENT APPLICATION
published in accordance with Art. 153(4) EPC

(43) Date of publication:
02.07.2025 Bulletin 2025/27

(21) Application number: 23856969.3

(22) Date of filing: 28.06.2023

(51) International Patent Classification (IPC):
H01M 4/525 (2010.01)    H01M 4/36 (2006.01)
H01M 4/505 (2010.01)

(52) Cooperative Patent Classification (CPC):
H01M 4/36; H01M 4/505; H01M 4/525; Y02E 60/10

(86) International application number:
PCT/JP2023/023999

(87) International publication number:
WO 2024/042852 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.08.2022 JP 2022132377

(71) Applicant: Panasonic Intellectual Property
Management Co., Ltd.
Kadoma-shi, Osaka 571-0057 (JP)

(72) Inventors:
• AOKI Yoshinori
Kadoma-shi, Osaka 571-0057 (JP)
• OGASAWARA Takeshi
Kadoma-shi, Osaka 571-0057 (JP)
• INOUE Katsuya
Kadoma-shi, Osaka 571-0057 (JP)
• FUJITANI Naoya
Kadoma-shi, Osaka 571-0057 (JP)

(74) Representative: Novagraaf International SA
Chemin de l'Echo 3
1213 Onex, Geneva (CH)

(54) POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY

(57) Provided is a positive electrode active material which contributes to improvement in the charging and discharging efficiency of a nonaqueous electrolyte secondary battery. A positive electrode active material included in this nonaqueous electrolyte secondary battery contains a composite metal oxide containing at least one element selected from the group consisting of Li, B, Na, Mg, Al, Si, P, K, Ti, Mn, Fe, Co, Zr, Nb, Mo, Sn, W, and Bi. The composite metal oxide includes secondary particles formed by aggregating primary particles. In each of the secondary particles, the proportion of the primary particles having an aspect ratio of at least 2 is 35% or more with respect to the total number of the primary particles. A surface modification layer which contains Ca and/or Sr is present on the surfaces of the primary particles, including the surface of the secondary particle.

Figure 1

**Description**

TECHNICAL FIELD

The present disclosure relates to a positive electrode active material for a non-aqueous electrolyte secondary battery, and a non-aqueous electrolyte secondary battery.

BACKGROUND ART

In recent years, non-aqueous electrolyte secondary batteries have been widely used as a power source for an electric vehicle, a power storage device for utilizing natural energy, and the like. Characteristics required for a positive electrode active material used for the non-aqueous electrolyte secondary battery have also varied depending on the use. For example, Patent Literature 1 discloses a positive electrode active material in which an existence proportion of primary particles with a high aspect ratio in a surface portion of secondary particles is larger than an existence proportion of primary particles with a high aspect ratio in a center portion of secondary particles.

CITATION LIST

PATENT LITERATURE

PATENT LITERATURE 1: Japanese Patent No. 6550598

SUMMARY

The non-aqueous electrolyte secondary battery may be required to improve charge-discharge efficiency from the viewpoint of increase in output. The art described in Patent Literature 1 does not investigate the improvement of the charge-discharge efficiency, and still has room for improvement.
It is an advantage of the present disclosure to provide a positive electrode active material that contributes to improvement of the charge-discharge efficiency of the non-aqueous electrolyte secondary battery.
A positive electrode active material for a non-aqueous electrolyte secondary battery of an aspect of the present disclosure includes a composite metal oxide containing at least one element selected from the group consisting of Li, B, Na, Mg, Al, Si, P, K, Ti, Mn, Fe, Co, Zr, Nb, Mo, Sn, W, and Bi, and the composite metal oxide includes secondary particles each formed by aggregation of primary particles, in the secondary particles, a proportion of the primary particles having an aspect ratio of greater than or equal to 2 is greater than or equal to 35% relative to a total number of the primary particles, and a surface-modifying layer containing at least one of the group consisting of Ca and Sr is present on surfaces of the primary particles including surfaces of the secondary particles.
A non-aqueous electrolyte secondary battery of an aspect of the present disclosure comprises: a positive electrode including the above positive electrode active material; a negative electrode; and a non-aqueous electrolyte.
According to the positive electrode active material for a non-aqueous electrolyte secondary battery of an aspect of the present disclosure, the non-aqueous electrolyte secondary battery with improved charge-discharge efficiency can be provided.

BRIEF DESCRIPTION OF DRAWING

FIG. 1 is a vertical sectional view of a non-aqueous electrolyte secondary battery of an example of an embodiment.
FIG. 2 is a view schematically illustrating a structure of high-aspect-ratio primary particles.

DESCRIPTION OF EMBODIMENTS

The present inventors have made intensive investigation and consequently found that the charge-discharge efficiency is specifically improved by protecting a surface of the positive electrode active material with a surface-modifying layer containing Ca or Sr and by setting the positive electrode active material composed of secondary particles to contain primary particles with an aspect ratio of greater than or equal to 2 at not less than a predetermined proportion.
The positive electrode active material may react with water during production and storage, before being assembled into the battery, thereby forming a deteriorated layer on the surface. In addition, the positive electrode active material may react with a non-aqueous electrolyte after being assembled into the battery, thereby forming a deteriorated layer on the surface. The deteriorated layer inhibits extraction and insertion of an alkali component between the positive electrode active material and the non-aqueous electrolyte to deteriorate the charge-discharge efficiency. It is presumed that the surface-modifying layer containing Ca or Sr inhibits formation of the deteriorated layer. In addition, it is presumed that the positive electrode active material composed of the secondary particles containing the primary particles with an aspect ratio of greater than or equal to 2 at not less than a predetermined proportion improves diffusability of the non-aqueous electrolyte toward inside of the secondary particles to enable to extract and insert the alkali component in the entirety of the secondary particles.

Hereinafter, an example of an embodiment of the non-aqueous electrolyte secondary battery according to the present disclosure will be described in detail. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior, a coin-shaped exterior, or a battery case composed of a laminated sheet including a metal layer and a resin layer.

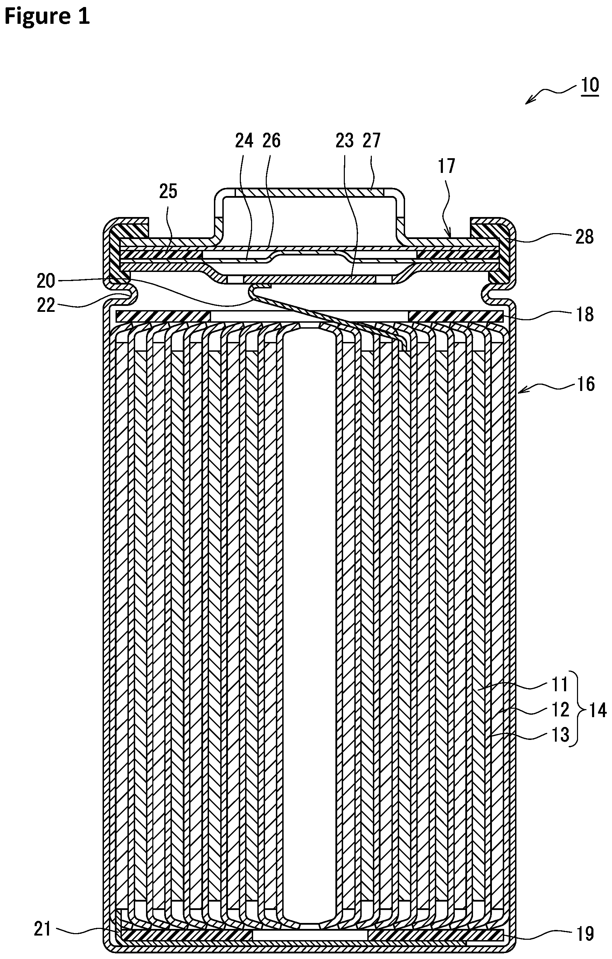

FIG. 1 is an axial sectional view of a cylindrical secondary battery 10 of an example of an embodiment. As illustrated in FIG. 1, the secondary battery 10 comprises a wound electrode assembly 14, an electrolyte liquid, and an exterior 16 housing the electrode assembly 14 and the electrolyte. The electrode assembly 14 includes a positive electrode 11, a negative electrode 12, and a separator 13, and has a wound structure in which the positive electrode 11 and the negative electrode 12 are spirally wound via the separator 13. The exterior 16 is a bottomed cylindrical metallic container having an opening on one side in an axial direction, and the opening of the exterior 16 is capped with a sealing assembly 17. Hereinafter, for convenience of description, the sealing assembly 17 side of the battery will be described as the upper side, and the bottom side of the exterior 16 will be described as the lower side.

All of the positive electrode 11, the negative electrode 12, and the separator 13 that constitute the electrode assembly 14 have an elongated rectangular shape, and are spirally wound in a longitudinal direction to be alternately stacked in a radial direction of the electrode assembly 14. The separator 13 separates the positive electrode 11 and the negative electrode 12 each other. To prevent precipitation of lithium, the negative electrode 12 is formed to be one size larger than the positive electrode 11. That is, the negative electrode 12 is formed to be longer than the positive electrode 11 in the longitudinal direction and the short direction. The two separators 13 are formed to be one size larger than at least the positive electrode 11, and disposed to, for example, sandwich the positive electrode 11. The electrode assembly 14 comprises: a positive electrode lead 20 connected to the positive electrode 11 by welding or the like; and a negative electrode lead 21 connected to the negative electrode 12 by welding or the like. In the electrode assembly 14, the longitudinal direction of the positive electrode 11 and the negative electrode 12 becomes a winding direction, and the short direction of the positive electrode 11 and the negative electrode 12 becomes the axial direction. That is, an end surface in the short direction of the positive electrode 11 and the negative electrode 12 forms an end surface of the axial direction of the electrode assembly 14.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior 16 by welding or the like, and the exterior 16 becomes a negative electrode terminal.

A gasket 28 is provided between the exterior 16 and the sealing assembly 17 to achieve sealability inside the battery. On the exterior 16, a grooved portion 22 in which a part of a side surface portion thereof projects inward to support the sealing assembly 17 is formed. The grooved portion 22 is preferably formed in a circular shape along a circumferential direction of the exterior 16, and supports the sealing assembly 17 with the upper face thereof. The sealing assembly 17 is fixed on the upper part of the exterior 16 with the grooved portion 22 and with an end of the opening of the exterior 16 caulked to the sealing assembly 17.

The sealing assembly 17 has a structure having the internal terminal plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts thereof. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the secondary battery 10, specifically the positive electrode 11, will be described in detail.

[Positive Electrode]

The positive electrode 11 has, for example, a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. A thickness of the positive electrode current collector is, for example, greater than or equal to 10 $\mu$m and less than or equal to 30 $\mu$m.

The positive electrode mixture layer includes, for example, the positive electrode active material, a conductive agent, and a binder. A thickness of the positive electrode mixture layer is, for example, greater than or equal to 10 $\mu$m and less than or equal to 150 $\mu$m on one side of the positive electrode current collector. The positive electrode 11 may be produced by, for example, applying a positive electrode mixture slurry including the positive electrode active material, the conductive agent, and the like on the surface of the positive electrode current collector, and drying and subsequently rolling the coating film to form the positive electrode mixture layer on both surfaces of the positive electrode current collector.

Examples of the conductive agent included in the positive electrode mixture layer include carbon-based particles such as carbon black (CB), acetylene black (AB), Ketjenblack, carbon nanotube (CNT), graphene, and graphite. These may be used singly, or may be used in combination of two or more thereof.

Examples of the binder included in the positive electrode mixture layer include a fluororesin such as polytetrafluoroethylene (PTFE) and polyvinylidene fluoride (PVDF), a polyimide resin, an acrylic resin, a polyolefin resin, and polyacrylonitrile (PAN). These may be used singly, or may be used in combination of two or more thereof.

The positive electrode active material included in the positive electrode mixture layer includes a composite metal oxide. The composite metal oxide contains: at least one element selected from the group consisting of Li, Na, B, Ni, Mg, Al, Si, P, K, Ti, Mn, Fe, Co, Zr, Nb, Mo, Sn, W, and Bi; and at least one of the group consisting of Ca and Sr.

The composite metal oxide includes an alkali metal, for example. The alkali metal is preferably Li.

A content rate of Ni in the composite metal oxide satisfies, for example, 50 mol% $\leq$ the Ni content rate $\leq$ 95 mol% relative to the total number of moles of metal elements excluding the alkali metal. The Ni content rate is preferably within this range from the viewpoint of achievement of both increasing the capacity and stabilizing the structure. A lower limit of the Ni content rate is preferably 70 mol%, and more preferably 80 mol%.

A content rate of Co in the composite metal oxide satisfies, for example, 0 mol% $\leq$ the Co content rate $\leq$ 15 mol% relative to the total number of moles of metal elements excluding the alkali metal. The Co content rate is preferably within this range from the viewpoint of cost reduction. An upper limit of the Co content rate is preferably 12 mol%.

A content rate of Mn in the composite metal oxide satisfies, for example, 0 mol% < the Mn content rate $\leq$ 40 mol% relative to the total number of moles of metal elements excluding the alkali metal. The Mn content rate is preferably within this range from the viewpoint of both increasing the capacity and safety. A lower limit of the Mn content rate is preferably 1 mol%, and more preferably 3 mol%. An upper limit of the Mn content rate is preferably 30 mol%, and more preferably 10 mol%.

The Co content rate and the Mn content rate in the composite metal oxide preferably satisfy 0 $\leq$ the Co content rate / the Mn content rate $\leq$ 2.

The composite metal oxide may contain Me (Me represents at least one element selected from the group consisting of B, Mg, Al, Si, P, Ti, Fe, Zr, Nb, Mo, Sn, W, and Bi) in addition to the alkali metal, Ni, Co, Mn, Ca, and Sr. A content rate of Me in the composite metal oxide satisfies, for example, 0 mol% < the Me content rate $\leq$ 20 mol% relative to the total number of moles of metal elements excluding the alkali metal. The Me content rate is preferably within this range from the viewpoint of achievement of both increasing the capacity and stabilizing the structure. An upper limit of the Me content rate is preferably 10 mol%.

A sum of content rates of Ca and Sr in the composite metal oxide preferably satisfies 0 mol% < the Ca content rate + the Sr content rate < 2 mol relative to the total number of moles of metal elements excluding the alkali metal. A lower limit of the sum of the Ca content rate and the Sr content rate is preferably 0.01 mol%, and more preferably 0.1 mol%. An upper limit of the sum of the Ca content rate and the Sr content rate is, for example, 1.9 mol%.

The composite metal oxide preferably satisfies the Ca content rate > the Sr content rate. This can remarkably improve the charge-discharge efficiency of the secondary battery.

The composite metal oxide preferably contains both Ca and Sr. This can remarkably improve the charge-discharge efficiency of the secondary battery.

The composite metal oxide is, for example, a composite oxide represented by a general formula $Li_aNi_xCo_yMn_z\text{-}Me_wCa_sSr_tO_{2\text{-}b}$, wherein $0.8 \leq a \leq 1.2$, $0.5 \leq x \leq 0.95$, $0 \leq y \leq 0.15$, $0 < z \leq 0.4$, $0 \leq w \leq 0.20$, $0 < s+t < 0.02$, $0 \leq b \leq 0.05$,

x+y+z+w+s+t = 1, and Me represents at least one element selected from the group consisting of B, Mg, Al, Si, P, Ti, Fe, Zr, Nb, Mo, Sn, W, and Bi. Proportions of the metal elements contained in the composite metal oxide may be measured with an inductively coupled plasma atomic emission spectrometer (ICP-AES), for example.

The composite metal oxide includes secondary particles each formed by aggregation of primary particles. A particle diameter of the primary particles is, for example, greater than or equal to 0.02 $\mu$m and less than or equal to 2 $\mu$m. The particle diameter of the primary particles is measured as a diameter of a circumscribed circle in a particle image observed with a scanning electron microscope (hereinafter, "SEM", JSM-7900F, manufactured by JEOL Ltd., for example). An average particle diameter of the secondary particles of the lithium-containing composite oxide is, for example, greater than or equal to 2 $\mu$m and less than or equal to 30 $\mu$m. Here, the average particle diameter means a median diameter (D50) on a volumetric basis. The D50 means a particle diameter at which a cumulative frequency is 50% from a smaller particle diameter side in a particle size distribution on a volumetric basis. The particle size distribution of the secondary particles can be measured by using a laser diffraction-type particle size distribution measuring device (for example, MT3000II, manufactured by MicrotracBEL Corp.) with water as a dispersion medium.

A surface-modifying layer containing at least one of the group consisting of Ca and Sr is present on surfaces of the primary particles including surfaces of the secondary particles. This can remarkably inhibit side reactions between the primary particles and the non-aqueous electrolyte. The surface-modifying layer may be uniformly dispersed on the entire surface of the primary particles including the surface of the secondary particles of the composite metal oxide, or may be present on a part thereof. The presence of Ca and Sr in the surface-modifying layer may be confirmed by, for example, energy dispersive X-ray spectrometry (TEM-EDX). In the surface-modifying layer, Ca and Sr are present as oxides for example.

At least one of the group consisting of Ca and Sr may be present in the surface-modifying layer and within 30 nm near the surface of the primary particles. This allows the effect of inhibiting the side reactions to be more remarkable.

In the secondary particles, a proportion of primary particles 30 with an aspect ratio of greater than or equal to 2 (hereinafter, which may be referred to as "high-aspect-ratio primary particles 30") is greater than or equal to 35% relative to a total number of primary particles. This can improve diffusability of the non-aqueous electrolyte toward inside of the secondary particles to extract and insert the alkali component in the entirety of the secondary particles. The proportion of the high-aspect-ratio primary particles 30 is preferably less than or equal to 75% relative to the total number of the primary particles from the viewpoint of high capacity.

The proportion of the high-aspect-ratio primary particles 30 may be calculated as follows.

(1) A cross section of the secondary particles is exposed. Examples of the method for exposing the cross section include a method of embedding the secondary particles into a resin and processing the secondary particles with a cross-section polisher (for example, IB19520CCP, manufactured by JEOL Ltd.) to expose the cross section of the secondary particles.

(2) By using an SEM, a backscattered image of the exposed cross section of the secondary particles is photographed.

(3) The sectional image obtained as above is imported into a computer, and an aspect ratio of each of the primary particles is calculated by using an image analysis software (for example, ImageJ, available from National Institutes of Health). The aspect ratio of the primary particle is obtained by dividing a length of a long side of the primary particle by a length of a short side in a direction perpendicular to the longest diameter.

(4) From the measurement results, a content rate of the high-aspect-ratio primary particles 30 is calculated based on the following formula.

(Content rate of high-aspect-ratio primary particles 30) = (Number of high-aspect-ratio primary particles 30) / (Total number of primary particles) $\times$ 100

(5) The above measurement is performed on five secondary particles included in the identical composite metal oxide, and an average value thereof is specified as the proportion of the high-aspect-ratio primary particles 30.

The composite metal oxide may have a layered structure in which an alkali metal layer and an Me layer are alternately stacked. Examples of the layered structure of the composite metal oxide include a layered structure belonging to the space group R-3m, a layered structure belonging to the space group C/2m, and a layered structure belonging to P6$_3$mc. The composite metal oxide preferably has the layered structure belonging to the space group R-3m from the viewpoints of increasing the capacity and safety of the crystal structure.

In the secondary particles, a proportion of primary particles in which an edge surface of the alkali metal layer and an edge surface of the Me layer are oriented in a long-diameter direction is preferably greater than or equal to 70% relative to the total number of the primary particles. This more remarkably improves the charge-discharge efficiency. In the secondary particles, the proportion of the primary particles in which an edge surface of the alkali metal layer and an edge surface of the Me layer are oriented in a long-diameter direction may be less than or equal to 100%, and may be less than or equal to 90% relative to the total number of the primary particles.

The proportion of the primary particles in which an edge surface of the alkali metal layer and an edge surface of the Me layer are oriented in a long-diameter direction is obtained from results of orientation analysis on the edge surface under the following condition by using electron beam backscattering diffraction (EBSD) (for example, Velocity, manufactured by EDAX International, Inc.) of the cross section of the positive electrode active material.

Acceleration voltage: 10 kV
WD: 15 mm
Sample tilt: 70°
Orientation analysis: Inverce Polo Figure Map
step: 0.05 μm

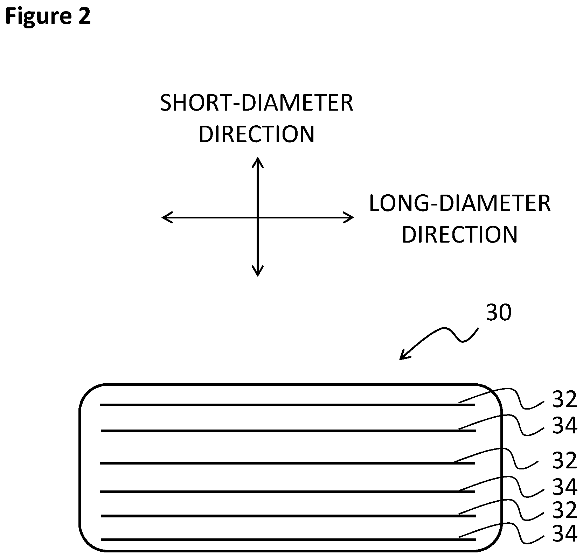

FIG. 2 is a view schematically illustrating the structure of the high-aspect-ratio primary particles 30. An edge surface 32 of the alkali metal layer and an edge surface 34 of the Me layer are oriented in the long-diameter direction of the high-aspect-ratio primary particles 30. As illustrated in FIG. 2, the edge surface 32 of the alkali metal layer and the edge surface 34 of the Me layer are alternately stacked in the short-diameter direction of the high-aspect-ratio primary particles 30, in other words, the edge surface 32 of the alkali metal layer and the edge surface 34 of the Me layer are oriented perpendicularly to the short-diameter direction of the high-aspect-ratio primary particles 30. Note that the expression "the edge surface is oriented in the long-diameter direction" means that the edge surface is arranged in substantially parallel in the long-diameter direction. Specifically, the expression "the edge surface is oriented in the long-diameter direction" means that a tilt of the edge surface relative to the long-diameter direction is in a range within a half of an angle formed with the edge surface and a basal surface. The term "edge surface" refers to an end of the layered structure (surface on which the stacking state is exposed) and the term "basal surface" refers to a surface portion of the layered structure (surface on which one surface of the layer is exposed).

The alkali metal may be Li, and the alkali metal layer may be a Li layer. In other words, the composite metal oxide may have a layered structure in which the Li layer and the Me layer are alternately stacked. A proportion of metal elements other than Li present in the Li layer with the layered structure is less than or equal to 8 mol% relative to the total number of moles of the metal elements excluding Li in the composite metal oxide. If the proportion of the metal elements other than Li in the Li layer is greater than 8 mol%, diffusability of Li ions in the Li layer may deteriorate to decrease the battery capacity. The metal elements other than Li present in the Li layer is mainly Ni, but may include another metal element. The proportion of the metal elements other than Li in the Li layer is, for example, greater than or equal to 0.1 mol%.

The proportion of the metal elements other than Li present in the Li layer with the layered structure is obtained from Rietveld analysis results of the X-ray diffraction pattern by the above X-ray diffraction measurement of the composite metal oxide. For the Rietveld analysis of the X-ray diffraction pattern, PDXL2 (Rigaku Corporation), which is a software for Rietveld analysis, may be used, for example.

In the composite metal oxide, a ratio m/n of a half-value width "m" of a diffraction peak of a (003) face to a half-value width "n" of a diffraction peak of a (110) face of the X-ray diffraction pattern by X-ray diffraction satisfies $0.75 \leq m/n$. If m/n is less than 0.75, the layered structure is excessively largely strained to embrittle the layered structure. An upper limit of m/n is, for example, 0.85. If m/n is greater than 0.85, the battery capacity may decrease.

The X-ray diffraction pattern is obtained by a powder X-ray diffraction method using a powder X-ray diffraction apparatus (manufactured by Rigaku Corporation, product name "RINT-TTR", radiation source Cu-Kα) under the following conditions.

Measuring Range: 15-120°
Scanning Rate: 4°/min
Analyzing Range: 30-120°
Background: B-spline
Profile Function: Split pseudo-Voigt function
Constraint: Li(3a) + Ni(3a) = 1
Ni(3a) + Ni(3b) = α (α represents each Ni content proportion)
ICSD No.: 98-009-4814

A crystallite size "s" of the composite metal oxide preferably satisfies $300 \text{ Å} \leq s \leq 700 \text{ Å}$ from the viewpoint of increase in the battery capacity and improvement of output characteristics of the battery. The crystallite size "s" is calculated with Scherrer equation from a half-value width of a diffraction peak of a (104) face of the X-ray diffraction pattern by the above X-ray diffraction. The Scherrer equation is represented by the following equation. In the following equation, "s" represents the crystallite size, "λ" represents a wavelength of the X-ray, B represents the half-value width of the diffraction peak of the (104) face, "θ" represents a diffraction angle (rad), and K represents a Scherrer constant. In the present embodiment, K is 0.9.

$$s = K\lambda/B\cos\theta$$

The positive electrode mixture layer may include another positive electrode active material in addition to the above positive electrode active material of the present embodiment. Examples of the other positive electrode active material include: a composite metal oxide having the proportion of the primary particles with an aspect ratio of greater than or equal to 2 of less than 35%; and a composite metal oxide without the surface-modifying layer.

Next, an example of a method for manufacturing a positive electrode active material according to the present embodiment will be described. For example, the method for manufacturing a positive electrode active material includes: a step of mixing a metal oxide including at least Ni, a Li raw material, and at least one of the group consisting of a Ca raw material and a Sr raw material to obtain a mixture; and a step of calcining this mixture to obtain the positive electrode active material.

The metal oxide may be produced by: separately adding dropwise a solution of metal salts containing Ni, Co, Mn, and the like and a solution of an alkali such as sodium hydroxide to a reaction vessel in which a solution with adjusted pH is stirred for adjusting pH on the alkaline side (for example, greater than or equal to 8.5 and less than or equal to 12.5) to precipitate (coprecipitate) a composite hydroxide; and thermally treating this composite hydroxide. The aspect ratio of the composite metal oxide may be regulated by changing the condition in precipitating the composite hydroxide (a concentration of the solution to be added dropwise, the pH in the reaction vessel, the solution temperature in the reaction vessel, a chelating agent, and the like) and the condition of the thermal treatment (the thermal treatment temperature, the thermal treatment time, the thermal treatment atmosphere, and the like). The thermal treatment temperature is preferably less than or equal to 600°C. For example, to reduce the aspect ratio of the composite metal oxide, the concentrations of the solution of the metal salt and the alkali solution to be added dropwise are reduced, and the thermal treatment is performed within a specific temperature range.

Then, the metal oxide containing at least Ni, the Li raw material, and at least one of the group consisting of the Ca raw material and the Sr raw material are mixed to obtain the mixture. Examples of the Li raw material include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the Ca raw material include $Ca(OH)_2$, $CaHPO_4$, $Ca(H_2PO_4)_2$, $Ca_3(PO_4)_2$, $CaO$, $CaCO_3$, $CaSO_4$, $Ca(NO_3)_2$, $CaCl_2$, and $CaAlO_4$. Examples of the Sr raw material include $Sr(OH)_2$, $SrHPO_4$, $Sr(H_2PO_4)_2$, $Sr_3(PO_4)_2$, $SrO$, $SrCO_3$, $SrSO_4$, $Sr(NO_3)_2$, $SrCl_2$, and $SrAlO_4$. In the mixing, the Me raw material may be mixed. Examples of the Me raw material include $ZrO_2$, $Nb_2O_5$, $Nb_2O_5 \cdot nH_2O$, $TiO_2$, $Ti(OH)_4$, $SiO$, $SiO_2$, $Li_2MoO_4$, $MoO_3$, $H_2MoO_4$, $WO_3$, $Li_2WO_4$, $Al(OH)_2$, $Al_2O_3$, $Al_2(SO_4)_3$, $Al(NO_3)_3$, $Mg(OH)_2$, $MgO$, $P_2O_5$, $Fe(OH)_2$, $Fe_2O_3$, $SnO_2$, $Bi(OH)_3$, $Bi_2O_3$, $H_3BO_3$, and $B_2O_3$.

The above mixture is calcined to obtain the composite metal oxide as the positive electrode active material. For example, the mixture is calcined, in an oxygen flow with an oxygen concentration of greater than or equal to 60% with a flow rate of the oxygen flow of greater than or equal to 0.1 mL/min and less than or equal to 4 mL/min per 10 cm3 of the calcination furnace or greater than or equal to 1 L/min per kilogram of the mixture. In the calcining condition, a first setting temperature is set to less than or equal to 450°C, a holding time at the first set temperature is within a range of greater than or equal to 0 hours and less than or equal to 8 hours, and a heating rate within less than or equal to 450°C is within a range of greater than 1.5°C/min and less than or equal to 6.0°C/min. A second setting temperature is set to greater than or equal to 450°C and less than or equal to 680°C, a holding time at the second set temperature is within a range of greater than or equal to 0 hours and less than or equal to 8 hours, and a heating rate within greater than or equal to 450°C and less than or equal to 680°C is within a range of greater than 1.0°C/min and less than or equal to 4.5°C/min. A highest reaching temperature is within a range of greater than or equal to 690°C and less than or equal to 900°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. In addition, this calcining step may be multistage calcining, and a plurality of calcining steps may be set in each temperature region in the range prescribed above. For example, changing the first set temperature, the second set temperature, each of the heating rates to the highest reaching temperature, and each of the holding times can vary crystallinity of the composite metal oxide to regulate the value of the ratio m/n of the half-value widths.

The produced composite metal oxide may be subjected to a water-washing and drying step, and a thermally treating step thereafter. The water-washing and drying step may be performed by a known method under a known condition. Into a cake-like composition after the water washing or during the thermally treating step, the Me raw material may be added. The thermally treating step is performed in, for example, vacuo, an oxygen flow, or air at a temperature of greater than or equal to 150°C and less than or equal to 600°C. Examples of the Me raw material added after the water washing or during the thermally treating step include tungsten oxide ($WO_3$), lithium tungstate ($Li_2WO_4$, $Li_4WO_5$, and $Li_6W_2O_9$), boric acid ($H_3BO_3$), lithium borate ($Li_2B_4O_7$, $Li_3BO_3$, $LiB_3O_5$, and $LiBO_2$), aluminum oxide ($Al_2O_3$), and aluminum sulfate ($Al_2(SO_4)_3$).

[Negative Electrode]

The negative electrode 12 has, for example, a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode 12, such as copper and a copper alloy, a film in which such a metal is disposed on a surface layer thereof, and the like may be used. A thickness of the negative electrode current collector is, for example, greater than or equal to 5 $\mu$m and less than or equal to 30 $\mu$m. The negative electrode mixture layer includes, for example, a negative electrode active material and a binder. A thickness of the negative electrode mixture layer is, for example, greater than or equal to 10 $\mu$m and less than or equal to 150 $\mu$m on one side of the negative electrode current collector. The negative electrode 12 may be produced by, for example, applying a negative electrode mixture slurry including the negative electrode active material, the binder, and the like on the surface of the negative electrode current collector, and drying and subsequently rolling the coating film to form the negative electrode mixture layer on both surfaces of the negative electrode current collector.

The negative electrode active material included in the negative electrode mixture layer is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0<y<2$), or the like may be used in combination with the graphite.

Example of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

[Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 13 may have a single-layer structure or a multi-layer structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1<x<6, and "n" represents 1 or 2), $LiB_{10}Cl_{10}$, $LiCl$, $LiBr$, $LiI$, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {"l" and "m" represent integers of greater than or equal to 0}. These lithium salts may be used singly, or a plurality of types thereof may be mixed for use. Among them, $LiPF_6$ is preferably used from the viewpoints of ion conductivity, electrochemical stability, and the like. A concentration of the lithium salt is preferably, for example, greater than or equal to 0.5 mol and less than or equal to 2 mol per litter of the non-aqueous solvent. In addition, vinylene carbonate or a propanesultone-type additive may be added.

EXAMPLES

Hereinafter, the present disclosure will be further described with Examples and Comparative Examples, but the present disclosure is not limited to the following Examples.

<Example 1-1>

[Production of Positive Electrode Active Material]

A composite hydroxide obtained by a coprecipitation method and represented by $[Ni_{0.80}Co_{0.12}Mn_{0.08}](OH)_2$ was calcined at 600°C for 8 hours to obtain a metal oxide ($Ni_{0.80}Co_{0.12}Mn_{0.08}O_2$). Then, $ZrO_2$ and $Ca(OH)_2$ were added to the metal oxide so that the mole ratio of Zr relative to a total amount of the metal elements was 0.3 mol% and a mole ratio of Ca was 0.2 mol%. Further, lithium hydroxide monohydrate ($LiOH·H_2O$) was mixed so that a mole ratio of Li relative to a total amount of Ni, Co, Mn, Zr, and Ca was 103% to obtain a mixture. This mixture was heated under an oxygen flow with an oxygen concentration of 95% (a flow rate of 3 L/min per kilogram of the mixture) at a heating rate of 4°C/min from room temperature to 400°C, and then heated at a heating rate of 2°C/min from 400°C to 650°C. Thereafter, the mixture was heated at a heating rate of 1°C/min from 650°C to 850°C, and then retained for 6 hours to obtain a composite metal oxide. This composite metal oxide was washed with water and dried to obtain a positive electrode active material of Example 1-1.

The obtained positive electrode active material was measured with an ICP atomic emission spectrometer (iCAP6300, manufactured by Thermo Fisher Scientific Inc.) to confirm elements shown in Table 1 described later, as elements excluding Li and O. The presence of a surface-modifying layer containing Ca on the surfaces of the primary particles including the surfaces of the secondary particles of this positive electrode active material was confirmed by TEM-EDX.

[Production of Positive Electrode]

Mixing 95 parts by mass of the above positive electrode active material, 3 parts by mass of acetylene black (AB), and 2 parts by mass of polyvinylidene fluoride (PVDF) was performed, and an appropriate amount of N-methyl-2-pyrrolidone (NMP) was further added to prepare a positive electrode mixture slurry. Then, the positive electrode mixture slurry was applied on both surfaces of a positive electrode current collector composed of aluminum foil, the coating film was dried, and then the coating film was rolled with a roller, and cut to a predetermined electrode size to produce a positive electrode. At a part of the positive electrode, an exposed portion where the surface of the positive electrode current collector was exposed was provided.

[Preparation of Non-Aqueous Electrolyte]

Ethylene carbonate (EC), ethyl methyl carbonate (EMC), and dimethyl carbonate (DMC) were mixed at a volume ratio of 3:3:4. Into this mixed solvent, lithium hexafluorophosphate ($LiPF_6$) was dissolved at a concentration of 1.2 mol/L to prepare a non-aqueous electrolyte.

[Production of Test Cell]

A positive electrode lead was attached to the exposed portion of the positive electrode, and a negative electrode lead was attached to Li metal foil as a negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Evaluation of Charge-Discharge Efficiency]

Under an environment temperature of 25°C, the test cell was charged at a constant current of 0.2 C until a cell voltage reached 4.3 V, and charged at a constant voltage of 4.3 V until a current value reached 0.01 V to measure a charge capacity C1. Thereafter, the test cell was discharged at a constant current of 0.5 C until the cell voltage reached 2.5 V to measure a discharge capacity C2 at 0.5 C. The charge-discharge efficiency at 0.5 C was calculated with the following formula.

$$\text{Charge-discharge efficiency (\%)} = C2/C1 \times 100$$

<Example 1-2>

A test cell was produced and evaluated in the same manner as in Example 1-1 except that, in the production of the positive electrode active material, the composite hydroxide was calcined at 300°C for 8 hours to obtain a metal oxide, and $TiO_2$ was added to this metal oxide instead of $ZrO_2$.

<Example 1-3>

A test cell was produced and evaluated in the same manner as in Example 1-1 except that, in the production of the positive electrode active material, the following points were changed. The presence of a surface-modifying layer containing Ca and Sr on the surfaces of the primary particles including the surfaces of the secondary particles of this positive electrode active material was confirmed by TEM-EDX.

(1) The composite hydroxide was calcined at 300°C for 4 hours to obtain a metal oxide.
(2) To this metal oxide, $Nb_2O_5$, $Ca(OH)_2$, and $Sr(OH)_2$ were added so that a mole ratio of Nb relative to a total amount of the metal elements was 0.5 mol%, a mole ratio of Ca was 0.3 mol%, and a mole ratio of Sr was 0.2 mol%.
(3) Lithium hydroxide monohydrate ($LiOH \cdot H_2O$) was mixed so that a mole ratio of Li relative to a total amount of Ni, Co, Mn, Nb, Sr, and Ca was 105 mol%.

<Example 1-4>

A test cell was produced and evaluated in the same manner as in Example 1-1 except that, in the production of the positive electrode active material, the following points were changed.

(1) A composite hydroxide obtained by a coprecipitation method and represented by $[Ni_{0.82}Co_{0.12}Mn_{0.06}](OH)_2$ was calcined at 400°C for 10 hours to obtain a metal oxide ($Ni_{0.82}Co_{0.12}Mn_{0.06}O_2$).
(2) To this metal oxide, $SiO_2$, $Al(OH)_3$, and $Ca(OH)_2$ were added so that mole ratios of Si, Al, and Ca relative to a total amount of the metal elements were each 0.5 mol%.
(3) The mixture was heated at a heating rate of 2°C/min from room temperature to 500°C, and then heated at a heating rate of 2°C/min from 500°C to 680°C. Thereafter, the mixture was heated at a heating rate of 2°C/min from 680°C to 820°C, and then retained for 4 hours to obtain a composite metal oxide.

<Comparative Example 1-1>

A test cell was produced and evaluated in the same manner as in Example 1-1 except that, in the production of the positive electrode active material, the composite hydroxide was calcined at 700°C for 8 hours to obtain a metal oxide, the amount of $ZrO_2$ added to this metal oxide was changed to 0.5 mol%, and Ca was not added.

<Comparative Example 1-2>

A test cell was produced and evaluated in the same manner as in Example 1-1 except that, in the production of the positive electrode active material, the amount of $ZrO_2$ added to this metal oxide was changed to 0.5 mol%, Ca was not added, and lithium hydroxide monohydrate ($LiOH \cdot H_2O$) was mixed so that a mole ratio of Li relative to a total amount of Ni, Co, Mn, and Zr was 101 mol%.

<Example 2-1>

In the production of the positive electrode active material, a composite hydroxide obtained by a coprecipitation method and represented by $[Ni_{0.92}Co_{0.02}Mn_{0.06}](OH)_2$ was calcined at 400°C for 4 hours to obtain a metal oxide $(Ni_{0.80}Co_{0.12}Mn_{0.08}O_2)$. Then, $Mg(OH)_2$, $Fe_2O_3$, $Li_2MoO_4$, and $Ca(OH)_2$ were added so that mole ratios of Mg, Fe, Mo, and Ca relative to a total amount of the metal elements were each 0.5 mol%, and lithium hydroxide monohydrate $(LiOH \cdot H_2O)$ was mixed so that a mole ratio of Li relative to a total amount of Ni, Co, Mn, Mg, Fe, Mo, and Ca was 105 mol% to obtain a mixture. This mixture was heated under an oxygen flow (flow rate of 3 L/min per kilogram of the mixture) with an oxygen concentration of 95% at a heating rate of 4°C/min from room temperature to 400°C, and then retained at 400°C for 2 hours. Then, the mixture was heated at a heating rate of 3°C/min from 400°C to 650°C. Thereafter, the mixture was heated at a heating rate of 0.8°C/min from 650°C to 730°C, and then retained for 4 hours to obtain a composite metal oxide. This composite metal oxide was washed with water and dried to obtain a positive electrode active material of Example 1-2. Then, a test cell was produced and evaluated in the same manner as in Example 1-1.

<Example 2-2>

A test cell was produced and evaluated in the same manner as in Example 2-1 except that, in the production of the positive electrode active material, the composite hydroxide was calcined at 100°C for 6 hours to obtain a metal oxide, and $ZrO_2$ and $Ca(OH)_2$ were added to this metal oxide so that mole ratios of Zr and Ca relative to a total amount of the metal elements were each 0.5 mol%.

<Example 2-3>

A test cell was produced and evaluated in the same manner as in Example 2-1 except that, in the production of the positive electrode active material, the following points were changed. The presence of a surface-modifying layer containing Ca and Sr on the surfaces of the primary particles including the surfaces of the secondary particles of this positive electrode active material was confirmed by TEM-EDX.

(1) A metal oxide $(Ni_{0.92}Mn_{0.08}O_2)$ was obtained by a coprecipitation method, and $Nb_2O_5$, $WO_3$, $Ca(OH)_2$, and $Sr(OH)_2$ were added to this metal oxide so that mole ratios of Nb, W, and Ca relative to a total amount of the metal elements were each 0.5 mol% and a mole ratio of Sr was 0.1 mol% to obtain a composite metal oxide.
(2) This composite metal oxide was washed with water, dried, and then mixed with $H_3BO_4$ so that a mole ratio of B relative to a total amount of Ni and Mn was 1 mol%, and the thermal treatment was performed in an oxygen flow at 400°C.

<Example 2-4>

A test cell was produced and evaluated in the same manner as in Example 2-1 except that, in the production of the positive electrode active material, a composite hydroxide obtained by a coprecipitation method and represented by $[Ni_{0.93}Mn_{0.04}Al_{0.03}](OH)_2$ was calcined at 500°C for 8 hours to obtain a metal oxide $(Ni_{0.93}Mn_{0.04}Al_{0.03}O_2)$, and $Sr(OH)_2$ was added to this metal oxide so that a mole ratio of Sr relative to a total amount of the metal elements was 1 mol%. The presence of a surface-modifying layer containing Sr on the surfaces of the primary particles including the surfaces of the secondary particles of this positive electrode active material was confirmed by TEM-EDX.

<Comparative Example 2-1>

A test cell was produced and evaluated in the same manner as in Example 2-1 except that, in the production of the positive electrode active material, the following points were changed.

(1) The composite hydroxide was calcined at 700°C for 8 hours to obtain a metal oxide.
(2) To this metal oxide, $Mg(OH)_2$, $Fe_2O_3$, $Li_2MoO_4$, and $Ca(OH)_2$ were not added.
(3) This mixture was heated at a heating rate of 5°C/min from room temperature to 400°C, and then heated at a heating rate of 5°C/min from 400°C to 650°C. Thereafter, the mixture was heated at a heating rate of 5°C/min from 650°C to 730°C, and then retained for 1 hour to obtain a composite metal oxide.

<Comparative Example 2-2>

A test cell was produced and evaluated in the same manner as in Example 2-1 except that, in the production of the positive electrode active material, a composite hydroxide obtained by a coprecipitation method and represented by $[Ni_{0.92}Mn_{0.08}](OH)_2$ was calcined at 800°C for 8 hours to obtain a metal oxide ($Ni_{0.92}Mn_{0.08}O_2$), and then $Ca(OH)_2$ and $Sr(OH)_2$ were added to this metal oxide so that mole ratios of Ca and Sr relative to a total amount of the metal elements were each 1 mol%.

Tables 1 and 2 show the charge-discharge efficiency of the test cells of Examples and Comparative Examples. Tables 1 and 2 also show composition of the positive electrode active material, the proportion of the high-aspect-ratio primary particles, presence or absence of Ca and Sr on the primary particle surfaces, the proportion of the primary particles in which the edge surface is oriented in the long-diameter direction, the ratio m/n of the half-value width, the proportion of the metal elements in the Li layer other than Li, and the crystallite size "s". The charge-discharge efficiency of the test cells of Examples 1-1 to 1-4 and Comparative Example 1-2 shown in Table 1 are values relative to the charge-discharge efficiency of the test cell of Comparative Example 1-1 being 100. The charge-discharge efficiency of the test cells of Examples 2-1 to 2-4 and Comparative Example 2-2 shown in Table 2 are values relative to the charge-discharge efficiency of the test cell of Comparative Example 2-1 being 100.

[Table 1]

| | Composition of positive electrode active material [mol%] | | | | | | Ca+Sr | Co/Mn | Proportion of high-aspect-ratio primary particles [%] | Presence of Ca and Sr on primary particle surfaces | Proportion of primary particles in which the edge surface is oriented in the long-diameter direction [%] | Ratio of half-value width m/n | Proportion of metal elements other than Li in Li layer [%] | Crystallite size "s" [Å] | Rate characteristics |
|---|---|---|---|---|---|---|---|---|---|---|---|---|---|---|---|
| | Ni | Co | Mn | Me | Ca | Sr | | | | | | | | | |
| Example 1-1 | 79.5 | 12 | 8 | Zr 0.3 | 0.2 | - | 0.2 | 1.5 | 40.2 | Present | 67.7 | 0.77 | 1.5 | 503 | 101 |
| Example 1-2 | 79.5 | 12 | 8 | Ti 0.3 | 0.2 | - | 0.2 | 1.5 | 42.3 | Present | 76.6 | 0.81 | 0.8 | 429 | 104 |
| Example 1-3 | 79 | 12 | 8 | Nb 0.5 | 0.3 | 0.2 | 0.5 | 1.5 | 49.7 | Present | 82.9 | 0.78 | 2.3 | 407 | 106 |
| Example 1-4 | 80.5 | 12 | 6 | Si 0.5 Al 0.5 | 0.5 | - | 0.5 | 2 | 54.6 | Present | 73.1 | 0.78 | 1.3 | 602 | 102 |
| Comparative Example 1-1 | 79.5 | 12 | 8 | Zr 0.5 | - | - | 0 | 1.5 | 34.5 | Absent | 73.7 | 0.77 | 1.6 | 448 | 100 |
| Comparative Example 1-2 | 79.5 | 12 | 8 | Zr 0.5 | - | - | 0 | 1.5 | 40.1 | Absent | 72.7 | 0.76 | 3.4 | 532 | 100 |

EP 4 579 808 A1

13

[Table 2]

| | Composition of positive electrode active material [mol%] | | | | | | Ca+ Sr | Co/ Mn | Proportion of high-aspect-ratio primary particles [%] | Presence of Ca and Sr on primary particle surfaces | Proportion of primary particles in which the edge surface is oriented in the long-diameter direction [%] | Ratio of half-value width m/n | Proportion of metal elements other than Li in Li layer [%] | Crystallite size "s" [Å] | Rate characteristics |
| | Ni | Co | Mn | Me | Ca | Sr | | | | | | | | | |
|---|---|---|---|---|---|---|---|---|---|---|---|---|---|---|---|
| Example 2-1 | 90 | 2 | 6 | Mg 0.5 Fe 0.5 Mo 0.5 | 0.5 | - | 0.5 | 0.33 | 35.9 | Present | 70.0 | 0.83 | 6.3 | 329 | 103 |
| Example 2-2 | 91 | 2 | 6 | Zr 0.5 | 0.5 | - | 0.5 | 0.33 | 36.1 | Present | 71.7 | 0.78 | 3.5 | 422 | 103 |
| Example 2-3 | 90 | - | 8 | Nb 0.5 W 0.5 B 0.4 | 0.5 | 0.1 | 0.6 | 0 | 40.2 | Present | 77.4 | 0.80 | 4.1 | 358 | 105 |
| Example 2-4 | 91 | - | 4 | Al 3 | - | 1 | 1 | 0 | 38.5 | Present | 72.6 | 0.75 | 4.3 | 667 | 101 |
| Comparative Example 2-1 | 92 | 2 | 6 | - | - | - | 0 | 0.33 | 34.2 | Absent | 67.5 | 0.79 | 5.9 | 482 | 100 |
| Comparative Example 2-2 | 90 | - | 8 | - | 1 | 1 | 2 | 0 | 28.5 | Present | 73.2 | 0.81 | 7.3 | 308 | 100 |

EP 4 579 808 A1

14

In Tables 1 and 2, the test cells of Examples exhibited improved charge-discharge efficiency compared with Comparative Examples. Therefore, it is understood that the charge-discharge efficiency is specifically improved by protecting the surface of the positive electrode active material with the surface-modifying layer containing Ca or Sr and by including the primary particles with an aspect ratio of greater than or equal to 2 at not less than a predetermined proportion in the positive electrode active material composed of the secondary particles.

The present disclosure will be further described with the following embodiments.

Constitution 1:

A positive electrode active material for a non-aqueous electrolyte secondary battery, including a composite metal oxide, wherein

the composite metal oxide contains: at least one element selected from the group consisting of Li, Na, B, Ni, Mg, Al, Si, P, K, Ti, Mn, Fe, Co, Zr, Nb, Mo, Sn, W, and Bi; and at least one of the group consisting of Ca and Sr, and the composite metal oxide includes secondary particles each formed by aggregation of primary particles,

in the secondary particles, a proportion of the primary particles having an aspect ratio of greater than or equal to 2 is greater than or equal to 35% relative to a total number of the primary particles, and

a surface-modifying layer containing at least one of the group consisting of Ca and Sr is present on surfaces of the primary particles including surfaces of the secondary particles.

Constitution 2:

The positive electrode active material for a non-aqueous electrolyte secondary battery according to Constitution 1, wherein the composite metal oxide includes an alkali metal.

Constitution 3:

The positive electrode active material for a non-aqueous electrolyte secondary battery according to Constitution 2, wherein a sum of content rates of Ca and Sr in the composite metal oxide satisfies 0 mol% < the Ca content rate + the Sr content rate < 2 mol relative to a total number of moles of metal elements excluding the alkali metal.

Constitution 4:

The positive electrode active material for a non-aqueous electrolyte secondary battery according to Constitution 2 or 3, wherein, in the composite metal oxide, a content rate of Ca relative to a total number of moles of metal elements excluding the alkali metal and a content rate of Sr relative to the total number of moles of metal elements excluding the alkali metal satisfy the Ca content rate > the Sr content rate.

Constitution 5:

The positive electrode active material for a non-aqueous electrolyte secondary battery according to any one of Constitutions 2 to 4, wherein

the composite metal oxide contains Mn, and

in the composite metal oxide, a content rate of Co relative to a total number of moles of metal elements excluding the alkali metal and a content rate of Mn relative to the total number of moles of metal elements excluding the alkali metal satisfy $0 \leq$ the Co content rate / the Mn content rate $\leq 2$.

Constitution 6:

The positive electrode active material for a non-aqueous electrolyte secondary battery according to any one of Constitutions 2 to 5, wherein

a content rate of Ni in the composite metal oxide satisfies 50 mol% $\leq$ the Ni content rate $\leq$ 95 mol% relative to the total number of moles of metal elements excluding the alkali metal, and

a content rate of Co in the composite metal oxide satisfies 0 mol% $\leq$ the Co content rate $\leq$ 15 mol% relative to the total number of moles of metal elements excluding the alkali metal.

Constitution 7:

The positive electrode active material for a non-aqueous electrolyte secondary battery according to any one of Constitutions 2 to 6, wherein the composite metal oxide has a layered structure in which an alkali metal layer and an Me layer are alternately stacked.

Constitution 8:

The positive electrode active material for a non-aqueous electrolyte secondary battery according to Constitution 7, wherein, in the secondary particles, a proportion of the primary particles in which an edge surface of the alkali metal layer and an edge surface of the Me layer are oriented in a long-diameter direction is greater than or equal to 70% relative to a total number of the primary particles.

Constitution 9:
The positive electrode active material for a non-aqueous electrolyte secondary battery according to Constitution 7 or 8, wherein the alkali metal is Li, and the alkali metal layer is a Li layer.

Constitution 10:
The positive electrode active material for a non-aqueous electrolyte secondary battery according to Constitution 9, wherein a proportion of metal elements other than Li present in the Li layer is less than or equal to 8 mol% relative to a total number of moles of metal elements excluding Li in the composite metal oxide.

Constitution 11:
The positive electrode active material for a non-aqueous electrolyte secondary battery according to Constitution 9 or 10, wherein a crystallite size "s" of the composite metal oxide satisfies $300\,\text{Å} \leq s \leq 700\,\text{Å}$, the crystallite size "s" being calculated with Scherrer equation from a half-value width of a diffraction peak of a (104) face of an X-ray diffraction pattern by X-ray diffraction.

Constitution 12:
The positive electrode active material for a non-aqueous electrolyte secondary battery according to any one of Constitutions 9 to 11, wherein, in the composite metal oxide, a ratio m/n of a half-value width "m" of a diffraction peak of a (003) face relative to a half-value width "n" of a diffraction peak of a (110) face of an X-ray diffraction pattern by X-ray diffraction satisfies $0.75 \leq m/n$.

Constitution 13:
A non-aqueous electrolyte secondary battery, comprising:

a positive electrode including the positive electrode active material for a non-aqueous electrolyte secondary battery according to any one of Constitutions 1 to 12;
a negative electrode; and
a non-aqueous electrolyte.

REFERENCE SIGNS LIST

10 Secondary battery, 11 Positive electrode, 12 Negative electrode, 13 Separator, 14 Electrode assembly, 16 Exterior, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 High-aspect-ratio primary particles, 32 Edge surface of Li layer, 34 Edge surface of Me layer

**Claims**

1. A positive electrode active material for a non-aqueous electrolyte secondary battery, including a composite metal oxide, wherein

    the composite metal oxide contains: at least one element selected from the group consisting of Li, Na, B, Ni, Mg, Al, Si, P, K, Ti, Mn, Fe, Co, Zr, Nb, Mo, Sn, W, and Bi; and at least one of the group consisting of Ca and Sr, and the composite metal oxide includes secondary particles each formed by aggregation of primary particles,
    in the secondary particles, a proportion of the primary particles having an aspect ratio of greater than or equal to 2 is greater than or equal to 35% relative to a total number of the primary particles, and
    a surface-modifying layer containing at least one of the group consisting of Ca and Sr is present on surfaces of the primary particles including surfaces of the secondary particles.

2. The positive electrode active material for a non-aqueous electrolyte secondary battery according to claim 1, wherein the composite metal oxide includes an alkali metal.

3. The positive electrode active material for a non-aqueous electrolyte secondary battery according to claim 2, wherein a sum of content rates of Ca and Sr in the composite metal oxide satisfies 0 mol% < the Ca content rate + the Sr content rate < 2 mol% relative to a total number of moles of metal elements excluding the alkali metal.

4. The positive electrode active material for a non-aqueous electrolyte secondary battery according to claim 2, wherein, in the composite metal oxide, a content rate of Ca relative to a total number of moles of metal elements excluding the alkali metal and a content rate of Sr relative to the total number of moles of metal elements excluding the alkali metal satisfy the Ca content rate > the Sr content rate.

5. The positive electrode active material for a non-aqueous electrolyte secondary battery according to claim 2, wherein

the composite metal oxide contains Mn, and
in the composite metal oxide, a content rate of Co relative to a total number of moles of metal elements excluding the alkali metal and a content rate of Mn relative to the total number of moles of metal elements excluding the alkali metal satisfy $0 \leq$ the Co content rate / the Mn content rate $\leq 2$.

6. The positive electrode active material for a non-aqueous electrolyte secondary battery according to claim 2, wherein

a content rate of Ni in the composite metal oxide satisfies 50 mol% $\leq$ the Ni content rate $\leq$ 95 mol% relative to the total number of moles of metal elements excluding the alkali metal, and
a content rate of Co in the composite metal oxide satisfies 0 mol% $\leq$ the Co content rate $\leq$ 15 mol% relative to the total number of moles of metal elements excluding the alkali metal.

7. The positive electrode active material for a non-aqueous electrolyte secondary battery according to claim 2, wherein the composite metal oxide has a layered structure in which an alkali metal layer and an Me layer are alternately stacked.

8. The positive electrode active material for a non-aqueous electrolyte secondary battery according to claim 7, wherein, in the secondary particles, a proportion of the primary particles in which an edge surface of the alkali metal layer and an edge surface of the Me layer are oriented in a long-diameter direction is greater than or equal to 70% relative to a total number of the primary particles.

9. The positive electrode active material for a non-aqueous electrolyte secondary battery according to claim 7, wherein the alkali metal is Li, and the alkali metal layer is a Li layer.

10. The positive electrode active material for a non-aqueous electrolyte secondary battery according to claim 9, wherein a proportion of metal elements other than Li present in the Li layer is less than or equal to 8 mol% relative to a total number of moles of metal elements excluding Li in the composite metal oxide.

11. The positive electrode active material for a non-aqueous electrolyte secondary battery according to claim 9, wherein a crystallite size "s" of the composite metal oxide satisfies 300 Å $\leq$ s $\leq$ 700 Å, the crystallite size "s" being calculated with Scherrer equation from a half-value width of a diffraction peak of a (104) face of an X-ray diffraction pattern by X-ray diffraction.

12. The positive electrode active material for a non-aqueous electrolyte secondary battery according to claim 9, wherein, in the composite metal oxide, a ratio m/n of a half-value width "m" of a diffraction peak of a (003) face to a half-value width "n" of a diffraction peak of a (110) face of an X-ray diffraction pattern by X-ray diffraction satisfies 0.75 $\leq$ m/n.

13. A non-aqueous electrolyte secondary battery, comprising:

a positive electrode including the positive electrode active material for a non-aqueous electrolyte secondary battery according to any one of claims 1 to 12;
a negative electrode; and
a non-aqueous electrolyte.

# Figure 1

**Figure 2**

SHORT-DIAMETER
DIRECTION

LONG-DIAMETER
DIRECTION

30

32
34

32
34
32
34

## INTERNATIONAL SEARCH REPORT

| International application No. |
|---|
| **PCT/JP2023/023999** |

| A. | CLASSIFICATION OF SUBJECT MATTER |
|---|---|

*H01M 4/525*(2010.01)i; *H01M 4/36*(2006.01)i; *H01M 4/505*(2010.01)i
FI:    H01M4/525; H01M4/36 C; H01M4/505

According to International Patent Classification (IPC) or to both national classification and IPC

| B. | FIELDS SEARCHED |
|---|---|

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/020845 A1 (SUMITOMO METAL MINING CO., LTD.) 01 February 2018 (2018-02-01) | 1-13 |
| A | JP 2014-67694 A (NGK INSULATORS LTD) 17 April 2014 (2014-04-17) | 1-13 |
| A | WO 2012/066927 A1 (NGK INSULATORS LTD) 24 May 2012 (2012-05-24) | 1-13 |
| A | US 2022/0181622 A1 (CONTEMPORARY AMPEREX TECHNOLOGY CO., LIMITED) 09 June 2022 (2022-06-09) | 1-13 |
| A | JP 2019-145204 A (PANASONIC CORP) 29 August 2019 (2019-08-29) | 1-13 |
| A | JP 2018-531500 A (LG CHEMICAL LTD) 25 October 2018 (2018-10-25) | 1-13 |

| ☐ Further documents are listed in the continuation of Box C. | ☑ See patent family annex. |
|---|---|

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **05 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/023999**

| Patent document cited in search report | | | Publication date (day/month/year) | Patent family member(s) | | | Publication date (day/month/year) |
|---|---|---|---|---|---|---|---|
| WO | 2018/020845 | A1 | 01 February 2018 | US | 2019/0260024 | A1 | |
| | | | | US | 2022/0399544 | A1 | |
| | | | | KR | 10-2019-0035716 | A | |
| | | | | CN | 109803927 | A | |
| JP | 2014-67694 | A | 17 April 2014 | US | 2015/0086787 | A1 | |
| | | | | WO | 2014/038394 | A1 | |
| WO | 2012/066927 | A1 | 24 May 2012 | US | 2012/0121979 | A1 | |
| | | | | EP | 2642563 | A1 | |
| | | | | CN | 103210524 | A | |
| US | 2022/0181622 | A1 | 09 June 2022 | WO | 2021/043148 | A1 | |
| | | | | EP | 3944375 | A1 | |
| | | | | CN | 112447967 | A | |
| JP | 2019-145204 | A | 29 August 2019 | WO | 2018/003477 | A1 | |
| JP | 2018-531500 | A | 25 October 2018 | US | 2018/0212237 | A1 | |
| | | | | WO | 2017/150949 | A1 | |
| | | | | EP | 3425703 | A1 | |
| | | | | KR | 10-2017-0103699 | A | |
| | | | | CN | 108028369 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6550598 B